# EUROPÄISCHE PATENTSCHRIFT

(11) **EP 0 492 314 B1**
(45) Veröffentlichungstag und Bekanntmachung des Hinweises auf die Patenterteilung: **25.09.1996**
(21) Anmeldenummer: 91121408.8
(22) Anmeldetag: 13.12.1991
(51) Int. Cl.: H04N 9/29

(54) **Entmagnetisierungsschaltung für die Bildröhre in einem Fernsehempfänger**
Demagnetisation circuit for the picture tube in a television receiver
Circuit de démagnétisation pour le tube d'image dans un récepteur de télévision

(30) Priorität: 22.12.1990 DE 4041484
(43) Veröffentlichungstag der Anmeldung: 01.07.1992
(73) Patentinhaber: DEUTSCHE THOMSON-BRANDT GMBH, 78048 Villingen-Schwenningen (DE)
(72) Erfinder: Stolte, Johannes, W-7730 VS-Tannheim (DE)

(56) Entgegenhaltungen:
- DE-A- 2 035 519
- PATENT ABSTRACTS OF JAPAN vol. 6, no. 95 (E-110)(973) 3. Juni 1982 & JP-A-57 026 982
- PATENT ABSTRACTS OF JAPAN vol. 13, no. 166 (E-746)(3514) 20. April 1989 & JP-A-63 318 885

## Beschreibung

Die Erfindung geht aus von einer Entmagnetisierungsschaltung gemäß dem Oberbegriff des Anspruchs 1.

Im allgemeinen reicht es aus, wenn der Entmagnetisierungsstrom nach dem Entmagnetisierungsvorgang auf einen Restwert von etwa 6 mA abklingt, da ein derartiger geringer Strom keine sichtbaren Störungen im Bild verursacht. Bei neuartigen Bildröhren wie z.B. Bildröhren mit einer 33-Zoll-Bildröhre oder mit dem Bildformat 16:9 ist es jedoch erforderlich, den Entmagnetisierungsstrom nach Beendigung des Entmagnetisierungsvorganges vollständig abzuschalten, da bei derartigen Röhren auch ein kleiner Entmagnetisierungsstrom sichtbare Störungen im Bild hervorrufen kann. Diese Störungen bestehen in Farbreinheitsfehlern aufgrund von Ladungsfehlern des Elektronenstrahls auf dem Bildschirm. Es ist bekannt (DE-A- 20 35 519), im Weg des Entmagnetisierungsstromes außer einem Netzwerk mit temperaturabhängigen Widerständen noch ein Relais vorzusehen, mit dem der Entmagnetisierungsstrom vollständig abgeschaltet wird.

Bei einem Fernsehempfänger mit Schaltnetzteil ist es bekannt, die Relaiswicklung von der Sekundärseite des Schaltnetzteils über ein Zeitkonstantenglied zu steuern. Bei dieser Lösung liegen somit der Relaiskontakt auf der mit dem Netz verbundenen, sogenannten heißen Primärseite des Schaltnetzteils, die Relaiswicklung jedoch auf der sogenannten kalten Sekundärseite des Schaltnetzteils. Das Relais muß daher entsprechend den VDE-Bestimmungen eine hohe Spannungsfestigkeit aufweisen. Das bedeutet, das ein spezielles Relais verwendet werden muß. Eine Steuerung von der Primärseite des Schaltnetzteils wäre grundsätzlich möglich. Dann würden jedoch eine zusätzliche Primärwicklung und eine aktive Schaltung mit einem Zeitkonstantenglied zur Steuerung der Relaiswicklung benötigt.

Der Erfindung liegt die Aufgabe zugrunde, eine Entmagnetisierungsschaltung der beschriebenen Art so auszubilden, daß ein einfaches Relais ohne spezielle Anforderungen an die Spannungsfestigkeit eingesetzt werden kann.

Diese Aufgabe wird durch die im Anspruch 1 angegebene Erfindung gelöst. Vorteilhafte Weiterbildungen der Erfindung sind in den Unteransprüchen angegeben.

Die Erfindung besteht somit im Prinzip darin, daß die Relaiswicklung in Reihe zur Primär-Arbeitswicklung des Schaltnetzteils liegt und von einem NTC-Widerstand überbrückt ist.

Bei der erfindungsgemäßen Lösung liegen somit der Schaltkontakt des Relais und die Relaiswicklung beide auf der mit dem Netz verbundenen primärseitigen, sogenannten heißen Seite des Schaltnetzteils. An die Spannungsfestigkeit des Relais werden somit keine speziellen Anforderungen gestellt, so daß ein einfaches preiswertes Relais eingesetzt werden kann. Eine zusätzliche Wicklung auf der Primärseite des Transformators des Schaltnetzteils, eine aktive Schaltung und ein Zeitkonstantenglied mit Kondensatoren wird nicht benötigt. Das beruht darauf, das die Relaiswicklung selbst zusammen mit dem NTC-Widerstand einen passiven Zeitschalter bildet. Der ohnehin fließende Strom durch die Primärwicklung wird also in vorteilhafter Weise zusätzlich für die Steuerung des Relais zur verzögerten Abschaltung des Entmagnetisierungsstromes ausgenutzt.

Ein Ausführungsbeispiel der Erfindung wird im folgenden anhand der Zeichnung erläutert. Darin zeigen
- Fig. 1: ein Schaltungsbeispiel für die Erfindung und
- Fig. 2: Kurven zur Erläuterung der Wirkungsweise der Schaltung nach Fig. 1

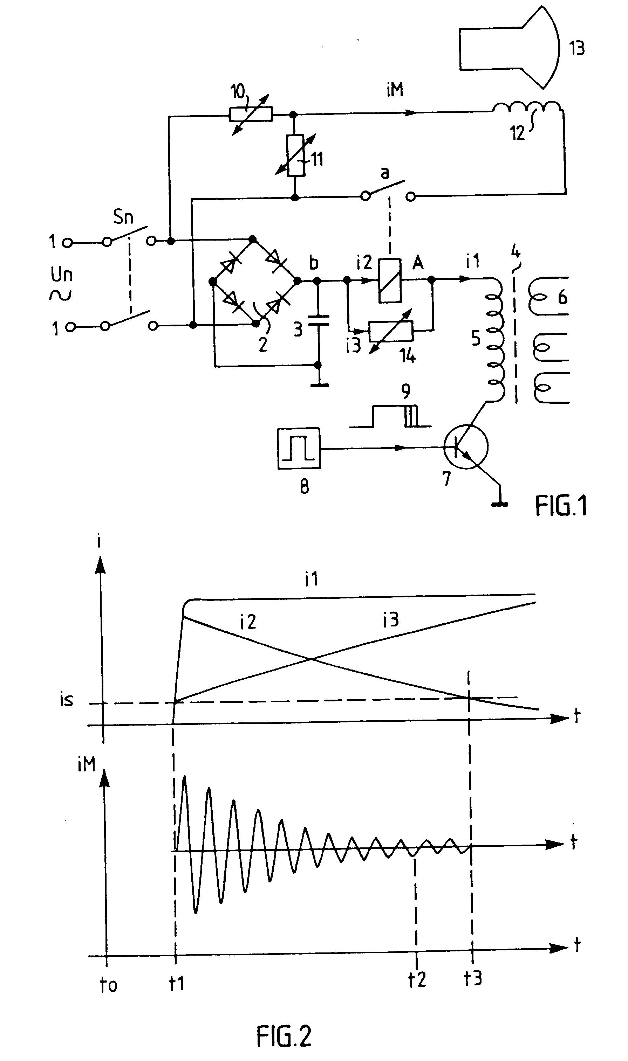

Fig. 1 zeigt das Netzteil eines Fernsehempfängers mit den Netzklemmen 1, dem Netzschalter Sn, dem Netzgleichrichter 2, dem Ladekondensator 3 und dem vereinfacht dargestellten Schaltnetzteil. Das Schaltnetzteil enthält den Trenntransformator 4 mit der Primär-Arbeitswicklung 5 und mehreren Sekundärwicklungen 6 zur Erzeugung von Betriebsspannungen, den als Leistungsschalter arbeitenden Schalttransistor 7 und den Steuergenerator 8. Der Steuergenerator 8 steuert den Schaltransistor 7 mit der impulsweitenmodulierten Impulsspannung 9 im Sinne einer Stabilisierung der auf der Sekundärseite erzeugten Betriebsspannungen.

Die Netzklemmen 1 sind außerdem über das temperaturabhängige Netzwerk mit dem PTC-Widerstand 10 und dem NTC-Widerstand 11 an die Entmagnetisierungsspule 12 für die Bildröhre 13 angeschlossen, wobei im Weg des Entmagnetisierungsstromes iMder Schaltkontakt a eines Relais liegt.

Die den Schaltkontakt a steuernde Relaiswicklung A ist jetzt zwischen den Ausgang b des Netzgleichrichters 2 und die Primär-Arbeitwicklung 5 geschaltet und außerdem von dem NTC-Widerstand 14 überbrückt.

Anhand der Fig. 2 wird die Wirkungsweise der Schaltung nach Fig. 1 erläutert. Im Zeitpunkt t0 ist der Netzschalter Sn noch geöffnet, der Fernsehempfänger ausgeschaltet und die Schaltung nach Fig. 1 stromlos. Im Zeitpunkt t1 wird der Fernsehempfänger durch Schließen des Netzschalters Sn eingeschaltet. Durch die Entmagnetisierungsspule 12 fließt jetzt ein netzfrequenter Entmagnetisierungsstrom iM mit einer Anfangsamplitude von etwa 12 A Spitze/Spitze. Durch die Erwärmung der Widerstände 10, 11 klingt die Amplitude des Stromes iM langsam ab. Außerdem fließt über die Arbeitwicklung 5 der Primärstrom i1 mit etwa konstanter Amplitude. Der NTC-Widerstand ist zunächst hochohmig, so daß der Strom i3 über den NTC-Widerstand 14 gering und der Strom i2 über die Relaiswicklung A entsprechend hoch ist. Das Relais ist daher angezogen, und der Kontakt a geschlossen, so daß der Entmagnetisierungsstrom iM fließen kann. Vom Zeitpunkt t1 an erwärmt sich der NTC-Widerstand 14. Sein Widerstandswert nimmt daher ab. Der Strom i3 steigt daher an, so daß der Strom i2 über die Relaiswicklung A entsprechend abfällt. Dabei ist angenommen, daß die Summe i2 + i3 gleich dem konstanten Primärstrom i1 ist. Im Zeitpunkt t2 hat der Entmagnetisierungsstrom iM den durch das Netzwerk 10, 11 vorgegebenen Restwert von ca 6 mA erreicht. Ab dem Zeitpunkt t2 würde somit ein geringer, konstanter Entmagnetisierungsstrom iM fließen. Dieser Strom wäre aber noch unzulässig hoch und würde auf dem Bildschirm der Bildröhre 13 sichtbare Störungen bewirken. Im Zeitpunkt t3 ist der Strom i3 durch die zunehmende Erwärmung des NTC-Widerstandes 14 soweit angestiegen und somit der Strom i2 soweit abgefallen, daß das Relais abfällt und der Kontakt a geöffnet wird. Dadurch wird der Strom iM vollständig abgeschaltet und somit sichtbare Störungen auf dem Bildschirm durch den Entmagnetisierungsstrom iM mit Sicherheit vermieden.

Die Relaiswicklung A kann auch an einer anderen Stelle im Weg des Stromes i1 durch die Arbeitswicklung 5 liegen, z.B. zwischen der Arbeitswicklung 5 und dem Kollektor des Transistors 7 oder zwischen dem Emitter des Transistors 7 und Erde

## Patentansprüche

1. Entmagnetisierungsschaltung für die Bildröhre (13) in einem Fernsehempfänger mit Schaltnetzteil, wobei im Weg des Entmagnetisierungsstroms (iM) ein Netzwerk mit temperaturabhängigen Widerständen (10, 11) und ein Relais (A) zum Abschalten des Entmagnetisierungsstroms (iM) liegen, **dadurch gekennzeichnet**, daß die Relaiswicklung (A) in Reihe zur Primär-Arbeitswicklung (5) des Schaltnetzteils liegt und von einem NTC-Widerstand (14) überbrückt ist.

2. Schaltung nach Anspruch 1, **dadurch gekennzeichnet**, daß die Relaiswicklung (A) zwischen dem Ausgang (b) des Netzgleichrichters (2) und der Primär-Arbeitswicklung (5) liegt.

3. Schaltung nach Anspruch 1, **dadurch gekennzeichnet**, daß die Relaiswicklung (A) zwischen dem Emitter des Schalttransistors (7) des Schaltnetzteils und der Erde liegt.

## Claims

1. A demagnetizing circuit for the picture tube (13) in a television receiver with switch mode power supply, whereby a network with temperature-dependent resistances (10, 11) and a relay (A) for switching off the demagnetizing current (iM) are located in the path of the demagnetizing current (iM), **characterized in that** the relay winding (A) is arranged in series with the primary power winding (5) of the switch mode power supply and is by-passed by an NTC resistor (14).

2. A circuit according to claim 1, **characterized in that** the relay winding (A) is located between the output (b) of the power rectifier (2) and the primary power winding (5).

3. A circuit according to claim 1, **characterized in that** the relay winding (A) is located between the emitter of the switching transistor (7) of the switch mode power supply and ground.

## Revendications

1. Circuit de démagnétisation pour le tube cathodique (13) dans un récepteur de télévision avec bloc d'alimentation à découpage, un réseau avec des résistances variant avec la température (10, 11) ainsi qu'un relais (A) pour l'arrêt du courant de démagnétisation (iM) se trouvant sur le passage du courant de démagnétisation (iM), caractérisé en ce que l'enroulement du relais (A) est monté en série avec l'enroulement de travail primaire (5) du bloc d'alimentation à découpage et qu'il est shunté par une résistance C.T.N. (14).

2. Circuit de commutation selon la revendication 1, caractérisé en ce que l'enroulement du relais (A) est situé entre la sortie (b) du redresseur de secteur (2) et l'enroulement de travail primaire (5).

3. Circuit de commutation selon la revendication 1, caractérisé en ce que l'enroulement du relais (A) est situé entre l'émetteur du transistor de couplage (7) du bloc d'alimentation à découpage et la terre.
